# EUROPEAN PATENT SPECIFICATION

(11) **EP 4 038 019 B1**
(45) Date of publication and mention of the grant of the patent: **08.11.2023**
(21) Application number: 20764128.3
(22) Date of filing: 03.09.2020
(51) Int. Cl.: C01G 53/00, B01J 19/00, B01J 19/18

(54) **PROCESS FOR PRECIPITATING A MIXED CARBONATE OR MIXED (OXY)HYDROXIDE**
VERFAHREN ZUR FÄLLUNG EINES GEMISCHTEN CARBONATS ODER GEMISCHTEN (OXY) HYDROXIDS
PROCÉDÉ DE PRÉCIPITATION D'UN CARBONATE MIXTE OU D'UN (OXY)HYDROXYDE MIXTE

(30) Priority: 01.10.2019 EP 19200858
(43) Date of publication of application: 10.08.2022
(73) Proprietor: BASF SE, 67056 Ludwigshafen am Rhein (DE)
(72) Inventor: BEIERLING, Thorsten, 67056 Ludwigshafen (DE); KESPE, Michael, Andreas, 67056 Ludwigshafen (DE)
(74) Representative: BASF IP Association
(86) International application number: PCT/EP2020/074623
(87) International publication number: WO 2021/063624

(56) References cited:
- EP-A1- 2 214 234
- EP-A1- 2 492 243
- EP-A1- 3 093 272
- WO-A1-2013/117508
- US-A1- 2003 054 251
- US-A1- 2005 221 179
- US-A1- 2013 202 502

## Description

The present invention is directed towards a process for precipitating a mixed carbonate or mixed (oxy)hydroxide comprising nickel from an aqueous solution comprising a nickel salt and at least one more transition metal selected from manganese and cobalt salts, wherein such process is carried out in a vessel comprising
(A) a vessel body,
(B) one or more elements selected from draft tubes and guide vanes,
(C) at least one stirrer whose pressure zone is in or between element(s) (B),
and wherein the process comprises the step of simultaneously adding said solution comprising a nickel salt in or between element(s) (B) and a solution of alkali metal carbonate or hydroxide in or between or outside element(s) (B).

Lithium ion secondary batteries are modern devices for storing energy. Many application fields have been and are contemplated, from small devices such as mobile phones and laptop computers through car batteries and other batteries for e-mobility. Various components of the batteries have a decisive role with respect to the performance of the battery such as the electrolyte, the electrode materials, and the separator. Particular attention has been paid to the cathode materials. Several materials have been suggested, such as lithium iron phosphates, lithium cobalt oxides, and lithium nickel cobalt manganese oxides. Although extensive research has been performed the solutions found so far still leave room for improvement.

The electrode material is of crucial importance for the properties of a lithium ion battery. Lithium-containing mixed transition metal oxides have gained particular significance, for example spinels and mixed oxides of layered structure, especially lithium-containing mixed oxides of nickel, manganese and cobalt; see, for example, EP 1 189 296. However, not only the stoichiometry of the electrode material is important, but also other properties such as morphology and surface properties.

Corresponding mixed oxides are prepared generally using a two-stage process. In a first stage, a sparingly soluble salt of the transition metal(s) is prepared by precipitating it from a solution, for example a carbonate or a hydroxide. This sparingly soluble salt is in many cases also referred to as a precursor. In a second stage, the precipitated salt of the transition metal(s) is mixed with a lithium compound, for example Li₂CO₃, LiOH or Li₂O, and calcined at high temperatures, for example at 600 to 1100°C.

Existing lithium ion batteries still have potential for improvement, especially with regard to the energy density. For this purpose, the cathode material should have a high specific capacity. It is also advantageous when the cathode material can be processed in a simple manner to give electrode layers of thickness from 20 µm to 200 µm, which should have a high density in order to achieve a maximum energy density (per unit volume), and a high cycling stability.

WO 2009/024424 discloses a process for preparing basic transition metal hydroxides, which consists of three steps. These can be characterized as follows:
a) providing at least a first starting solution and a second starting solution,
b) combining at least the first starting solution and the second starting solution in a reactor and producing a homogeneously mixed reaction zone having a specific mechanical power input of at least 2 watts/liter and producing a product suspension comprising insoluble product and a mother liquor which is supersaturated by setting an excess of alkali and has a pH of 10 to 12,
c) partially separating the mother liquor from the precipitated product to set solids contents of at least 150 g/l in the suspension by means of clarification or filtration elements.

However, homogeneous introduction of relatively large amounts of mechanical energy into large volumes of solutions or suspensions is difficult in terms of apparatus.

In WO 2012/095381 and WO 2013/117508, processes for the precipitation of hydroxides or carbonates are disclosed wherein vessels with compartments are used. A lot of energy is introduced in the respective compartment(s). Carrying out said process on commercial scale is difficult, though.

US 2003/054251 discloses a method for precipitating spherical nickel-containing hydroxide having a high density and a large particle diameter, the method including adding the corresponding metal salt solutions and a basic solution simultaneously into the reactor shown in Figure 2.

It was the objective of the present invention to provide a process for precipitating mixed hydroxides that have a homogenous morphology at high throughput.

Accordingly, the process as defined at the outset has been found, hereinafter also referred to as "inventive process" or "process according to the (present) invention". The inventive process may be carried out as a batch process or as a continuous or semi-continuous process, continuous being preferred.

The inventive process is directed to a process for precipitating a carbonate or (oxy)hydroxide comprising nickel from an aqueous solution of a nickel salt.

In the present invention, the carbonate or (oxy)hydroxide precipitated according to the inventive process comprises at least one more transition metal selected from manganese and cobalt.

The process according to the invention relates to the preparation of carbonates or (oxy)hydroxides. In the context of the present invention, "hydroxides" refer to hydroxides and do not only include stoichiometrically pure hydroxides but especially also compounds which, as well as transition metal cations and hydroxide ions, also have anions other than hydroxide ions, for example oxide ions and carbonate ions, and/or cations other than transition metal cations.

In one embodiment of the present invention, hydroxides may have 0.01 to 45 mole-% and preferably 0.5 to 40 mole-% of anions other than hydroxide ions, based on the total number of anions. A preferred anion other than hydroxide is carbonate. Sulfate may also be present as an impurity in embodiments in which a sulfate was used as starting material.

In the context of the present invention, "carbonate" does not only include stoichiometrically pure carbonates but especially also compounds which, as well as metal cations and carbonate ions, also have anions other than carbonate, for example oxide ions and hydroxide ions. In the context of the present invention, in "carbonates", the molar amount of carbonate is higher than the sum of molar amounts of all other anions, for example from 60 mole-%, preferably at least 80 mole-%.

In one embodiment of the present invention, carbonate may refer to species that comprise 0.01 to 45 mole-% and preferably 0.5 to 40 mole-% of anions other than carbonate ions, based on the total number of anions. A preferred anion other than carbonate is oxide. Sulfate may also be present as an impurity in embodiments in which a sulfate was used as starting material.

In the context of the present invention, oxyhydroxides may have oxide and hydroxide anions in any molar ratio from 1 : 10 to 10 : 1 with the sum of oxide and hydroxide being more than the molar sum of anions other than oxide and hydroxide.

Carbonate or (oxy)hydroxide made according to the inventive process comprises nickel and at least one metal selected from Co and Mn. Preferred are combinations from Ni and Co and Al and combinations from Ni and Co and Mn.

In one embodiment of the present invention, (oxy)hydroxide or carbonate has 0.01 to 20 mol% and preferably 0.2 to 15.0 mol% of cations other than transition metal cations, based on the content of transition metal cations. A preferred non-transition metal cation is Al³⁺.

In one embodiment of the present invention, (oxy)hydroxide corresponds to the general formula (I)

NiₐM¹_{b}Mn_{c}Oₓ(OH)_{y}(CO₃)ₜ (I)

where the variables are each defined as follows:
- M¹: is Co or combinations of Co and at least one element selected from Ti, Zr, Al and Mg,
- a: is a number in the range from 0.15 to 0.95, preferably 0.5 to 0.9,
- b: is a number in the range from 0.05 to 0.75, preferably 0.1 to 0.4,
- c: is a number in the range from zero to 0.8, preferably 0.05 to 0.65,

where a + b + c = 1.0,
0 ≤ x < 1, preferably 0.3 < x < 1,
1 < y ≤ 2.2, preferably 1 < y < 2,
0 ≤ t ≤ 0.3.

In other embodiments, 0.5 ≤ t ≤ 1.0, 0 ≤ y ≤ 1.0, and 0 ≤ x < 0.2.

Many elements are ubiquitous. For example, sodium, copper and chloride are detectable in certain very small proportions in virtually all inorganic materials. In the context of the present invention, proportions of less than 0.01 % by weight of cations or anions are disregarded. Any (oxy)hydroxide or carbonate obtained according to the inventive process which comprises less than 0.01% by weight of sodium is thus considered to be sodium-free in the context of the present invention.

In one embodiment of the present invention the inventive process is a process for precipitating a mixed hydroxide or oxyhydroxide with an average particle diameter (D50) in the range of from 3 to 16 µm, preferably 4 to 6 or 8 to 12 µm, determined by light scattering. In other embodiments, the average particle diameter (D50) is in the range of from 12 to 14 µm.

In one embodiment of the present invention the inventive process is a process for precipitating a mixed carbonate with an average particle diameter (D50) in the range of from 3 to 16 µm, preferably 4 to 6 or 8 to 12 µm, determined by light scattering. In other embodiments, the average particle diameter (D50) is in the range of from 12 to 14 µm.

The process according to the invention is performed by combining at least one aqueous solution of at least two different metal salts with at least one aqueous solution of at least one alkali metal hydroxide or (hydrogen)carbonate.

In the context of the present invention, aqueous solution of nickel and at least one more transition metal selected from manganese and cobalt and - optionally - at least one more cation such as Al³⁺ or Mg²⁺ is also referred to as aqueous solution of transition metals salts for short.

Aqueous solution transition of metal salts comprises a nickel salt. Examples of nickel salts are especially water-soluble nickel salts, i.e. nickel salts which have a solubility of at least 25 g/l and preferably at least 50 g/l, in distilled water, determined at room temperature. Preferred salts of nickel are, for example, salts of carboxylic salts, especially acetates, and also sulfates, nitrates, halides, especially bromides or chlorides, of nickel, the nickel being present as Ni⁺².

Aqueous solution of transition metal salts may comprise at least one further transition metal salt, preferably two or three further transition metal salts, especially salts of two or three transition metals or of cobalt and aluminum. Suitable transition metal salts are especially water-soluble salts of transition metal(s), i.e. salts which have a solubility of at least 25 g/l and preferably at least 50 g/l, in distilled water, determined at room temperature. Preferred transition metal salts, especially salts of cobalt and manganese, are, for example, carboxylic acid salts, especially acetates, and also sulfates, nitrates, halides, especially bromides or chlorides, of transition metal, the transition metal(s) preferably being present in the +2 oxidation state. Such a solution preferably has a pH in the range from 2 to 7, more preferably in the range from 2.5 to 6. However, Ti and/or Zr, if applicable, are present in an oxidation state of +4. Aluminum is present in the oxidation sate of +3, and it may be introduced, e.g., as sodium aluminate or as acetate or sulfate of aluminum.

In one embodiment of the present invention, it is possible to proceed from an aqueous solution of metal salts which comprises, as well as water, one or more organic solvents, for example ethanol, methanol or isopropanol, for example up to 15% by volume, based on water. Another embodiment of the present invention proceeds from an aqueous solution of transition metal salts comprising less than 0.1% by weight, based on water, or preferably no organic solvent.

In one embodiment of the present invention, aqueous solution of transition metal salts used comprises ammonia, ammonium salt or one or more organic amines, for example methylamine or ethylene diamine. Ammonia or organic amines can be added separately, or they can be formed by dissociation of complex salts of transition metal salt in aqueous solution. Aqueous solution of transition metal salts preferably comprises less than 10 mol% of ammonia or organic amine, based on transition metal M. In a particularly preferred embodiment of the present invention, aqueous solution of transition metal salts does not comprise measurable proportions either of ammonia or of organic amine.

Preferred ammonium salts may, for example, be ammonium sulfate and ammonium sulfite.

Aqueous solution of transition metal salts may, for example, have an overall concentration of transition metal(s) in the range from 0.01 to 5 mol/l of solution, preferably 1 to 3 mol/l of solution.

In one embodiment of the present invention, the molar ratio of transition metals in aqueous solution of transition metal salts is adjusted to the desired stoichiometry in the cathode material or mixed transition metal oxide to be used as precursor. It may be necessary to take into account the fact that the solubility of different transition metal carbonates can be different.

Aqueous solution of transition metal salts may comprise, as well as the counterions of the transition metal salts, one or more further salts. These are preferably those salts which do not form sparingly soluble salts with M, or bicarbonates of, for example, sodium, potassium, magnesium or calcium, which can cause precipitation of carbonates in the event of pH alteration. One example of such salts is ammonium sulfate.

In another embodiment of the present invention, aqueous solution of transition metal salts does not comprise any further salts.

In one embodiment of the present invention, aqueous solution of transition metal salts may comprise one or more additives which may be selected from biocides, complexing agents, for example ammonia, chelating agents, surfactants, reducing agents, carboxylic acids and buffers. In another embodiment of the present invention, aqueous solution of transition metal salts does not comprise any additives.

Examples of suitable reducing agents which may be in aqueous solution of transition metal salts are sulfites, especially sodium sulfite, sodium bisulfite (NaHSOs), potassium sulfite, potassium bisulfite, ammonium sulfite, and also hydrazine and salts of hydrazine, for example the hydrogen sulfate of hydrazine, and also water-soluble organic reducing agents, for example ascorbic acid or aldehydes.

Combination is effected with aqueous solution of at least one alkali metal hydroxide, for example by addition of solution of alkali metal hydroxide to aqueous solution of transition metal salts. Particularly preferred alkali metal hydroxides are sodium hydroxide and potassium hydroxide, with sodium hydroxide being most preferred.

In one embodiment of the present invention, the precipitation is brought about by addition of an aqueous solution of sodium hydroxide or potassium hydroxide to an aqueous solution of acetates, sulfates or nitrates of transition metal salts.

In embodiments wherein (oxy)hydroxides are precipitated, it is preferred to control the stoichiometry of salts to hydroxide in a way that the molar ratio of metal to hydroxide is in the range of from 1:2.0 to 1:2.5.

In embodiments wherein carbonates are precipitated, it is preferred to control the stoichiometry of salts to carbonate in a way that the molar ratio of metal to carbonate is in the range of from 1:1 to 1:1.25.

Aqueous solution of alkali metal hydroxide may have a concentration of hydroxide in the range from 0.1 to 10 mol/l, preferably 1 to 7.5 mol/l.

Aqueous solution of alkali metal hydroxide may comprise one or more further salts, for example ammonium salts, especially ammonium hydroxide, ammonium sulfate or ammonium sulfite. In one embodiment, a molar NH₃: transition metal ratio of 0.01 to 0.9 and more preferably of 0.08 to 0.65 can be established.

In one embodiment of the present invention, said aqueous solution of alkali metal hydroxide may comprise ammonia or one or more organic amines, for example methylamine.

In another embodiment of the present invention, one or more ammonium salts, ammonia or one or more organic amines may be added separately to the reaction mixture.

The combination can be executed in one or more steps, in each case continuously or batchwise. In case several combined steps are desired, it is preferred to perform the inventive process in a cascade of similarly designed or of identical continuous stirred tank reactors. In each case, said aqueous solution comprising a nickel salt and aqueous solution containing alkali metal hydroxide or alkali metal carbonate are added simultaneously, that means, they are combined in said vessel.

In one embodiment of the present invention, the combining is performed in such a way that an aqueous solution of alkali metal hydroxide is fed into the stirred vessel with an aqueous solution comprising all transition metals desired for performance of the process according to the invention as salts, each via separate feed points. The latter procedure has the advantage that inhomogeneity in the concentration ratios of the different transition metals can be more easily avoided. For instance, solution of alkali metal hydroxide can be fed into the stirred vessel via one or more feed points, and in such a way that the particular feed point is above or below the liquid level. More particularly, metered addition can be effected into the pressure zone generated by the stirrer in a stirred tank reactor.

In one embodiment of the present invention, it is additionally possible to meter aqueous solution comprising nickel into the stirred vessel via one or more feed points, for example up to three, and in such a way that the particular feed point is below the liquid level.

The inventive process comprises the step of simultaneously adding said solution comprising a nickel salt in or between element(s) (B) and said solution of alkali metal carbonate or hydroxide in or between or outside element(s) (B), preferably outside element(s) (B).

In one embodiment of the present invention, the inventive process can be performed at a temperature in the range from 20 to 90°C, preferably 30 to 80°C and more preferably 35 to 75°C. The temperature is determined in the stirred vessel.

Combination of aqueous solution comprising a nickel salt with at least one solution of alkali metal hydroxide produces an aqueous suspension of a mixed hydroxide comprising nickel because nickel hydroxide precipitates. The aqueous continuous phase, which is also called mother liquor in the context of the present invention, comprises water-soluble salts and optionally further additives present in solution. Examples of possible water-soluble salts include alkali metal salts of the counterions of transition metal, for example sodium acetate, potassium acetate, sodium sulfate, potassium sulfate, sodium nitrate, potassium nitrate, sodium halide, potassium halide, including the corresponding ammonium salts, for example ammonium nitrate, ammonium sulfate and/or ammonium halide. Mother liquor most preferably comprises sodium chloride, potassium chloride or ammonium chloride. Mother liquor may further comprise additional salts, any additives used and any excess alkali metal hydroxide, and also non-precipitated transition metal in the form of transition metal salt.

The pH value of the mother liquor is preferably in the range from 9 to 13, more preferably in the range from 11 to 12.7, measured after cooling the mother liquor to 23°C.

Combination of aqueous solution comprising a nickel salt with at least one solution of alkali metal carbonate produces an aqueous suspension of a mixed carbonate containing nickel since nickel carbonate - together with other carbonates - precipitates out. The aqueous continuous phase, which is also called mother liquor in the context of the present invention, comprises water-soluble salts and optionally further additives present in solution. Examples of possible water-soluble salts include alkali metal salts of the counterions of transition metal, for example sodium acetate, potassium acetate, sodium sulfate, potassium sulfate, sodium nitrate, potassium nitrate, sodium halide, potassium halide, including the corresponding ammonium salts, for example ammonium nitrate, ammonium sulfate and/or ammonium halide. Mother liquor most preferably comprises sodium chloride, potassium chloride or ammonium chloride. Mother liquor may further comprise additional salts, any additives used and any excess alkali metal carbonate or bicarbonate, and also non-precipitated transition metal such as nickel in the form of transition metal salt.

It has now been found that the morphology and the surface properties of cathode active materials can be influenced not only in the calcination stage, but also in the stage of production of the respective precursor. For said purpose, the precipitation is carried out in a vessel comprising
(A) a vessel body, hereinafter also referred to as component (A),
(B) one or more elements selected from draft tubes and guide vanes hereinafter also referred to as element(s) (B), and
(C) at least one stirrer whose pressure zone is in or between the element(s) (B).

Such components are described in more detail below.

The vessel body may have the appearance of a stirred tank reactor, for example with a height to diameter ratio in the range of from 1 to 3.

The vessel body (A) may be made from duplex stainless steel, molybdenum and copper rich steel alloys or nickel-based alloys.

The vessel described above may additionally include one or more pumps, inserts, mixing units, baffles, wet grinders, homogenizers and stirred tanks working as a further compartment in which the precipitation takes place and preferably having a much smaller volume than the vessel described at the outset. Examples of particularly suitable pumps are centrifugal pumps and peripheral wheel pumps.

In a preferred embodiment of the present invention, though, such vessel is void of any separate compartments, external loops or additional pumps in which a precipitation of a carbonate or a (oxy)hydroxide is carried out.

A further component of the vessel includes one or more elements (B) selected from draft tubes and guide vanes. Such element(s) (B) control(s) the hydraulic flow of the slurry formed during - and as a result of - the precipitation and that induce a loop-type circulation flow.

Draft tubes are comparable with tubes that are inside the vessel body (A) and whose upper rim or at least one opening is below the gauge of the slurry in the vessel. Thus, slurry circulates through such draft tube. Guide vanes also enable circulation of the slurry.

Guide vanes are usually blade-shaped.

In one embodiment of the present invention, the one or more elements (B) are mounted to the internal surface of the vessel. Preferably, they are mounted to the inner wall with one or more spacers.

In one embodiment of the present invention, the one or more element(s) (B) are mounted between the vessel lid and the vessel side walls, for example mounted to baffles inside the vessel.

In a draft tube, said loop-type circulation preferably goes down inside such element(s) and upwards outside.

In one embodiment of the present invention, the ratio of diameter of the draft tube to inner diameter of the vessel body is in the range of from 0.5 to 0.85.

In one embodiment of the present invention, the height of the draft tube is in the range of from 1.0 to 2.5 times the draft tube diameter.

Depending on the arrangement of the guide vanes, the circulation may be in any direction.

A stirrer comprises a stirrer element - sometimes also referred to as mixing element - that causes the flow, for example a propeller, and a stirrer shaft. In the vessel used in the inventive process, the pressure zone is in or between element(s) (B), depending on their shape. For example, in embodiments wherein elements (B) are designed as baffles, the pressure zone of stirrer (C) is between elements (B). In embodiments wherein element (B) is designed as a draft tube, the pressure zone of stirrer (C) is located in the draft tube.

The pressure zone of stirrer (C) is the zone where zone of pumping direction (in German: Förderrichtung), opposed to the suction direction, and it is usually located right below the stirrer element. In embodiments where the stirrer has more than one stirrer elements in vertical arrangement, the pressure zone is below the uppermost stirrer element.

In one embodiment of the present invention, stirrer elements (C) are selected from pitch blade turbines, propellers, hydrofoils, stirrer discs, blades, paddles, and bended cutouts. In a preferred embodiment, stirrer elements are selected from pitch blade turbines, propellers, hydrofoils and turbines such as Rushton turbines.

In one embodiment of the present invention, the stirrer elements (C) are two sets of propellers or turbines that are arranged vertically over each other on the same shaft. In such embodiments, the pressure zone is located between the two sets of propellers or hydrofoils or turbines, respectively, for example at half-distance, and preferably more closely to the upper stirrer element than to the lower stirrer element, for example in the upper thirty percent, referring to the length of the stirrer shaft.

in one embodiment of the present invention, the stirrer elements (C) are two sets of propellers or turbines that are arranged vertically over each other on the same shaft, and the distance between the two stirrer elements (C) is in the range of from 50 to 250% of the diameter of the propellers or turbines, respectively.

By performing the inventive process it is possible to precipitate mixed carbonates or mixed (oxy)hydroxides comprising nickel with high space velocity and efficiency including a high through-put.

The present invention is further illustrated by working examples and a drawing.

### Brief description of the drawing:

A:vessel body
B.1: a draft tube
B.2: baffles
C: stirrer element
D: Inlet pipes for dosing outside the draft tube
E: inlet pipes for dosing into the pressure zone
F: engine for stirrer

The drawing is a conceptual one. In the drawing, further details have been omitted for simplification matters.

### Working Example 1:

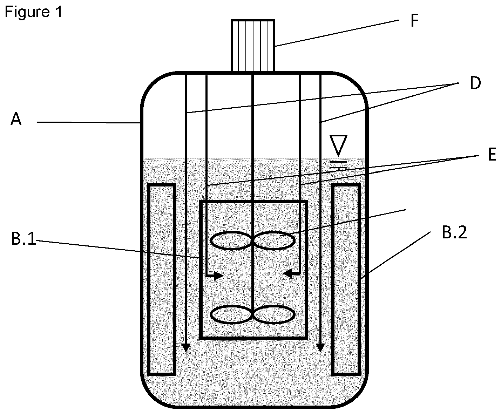

A 50L stirred vessel in accordance with Figure 1 is charged with an aqueous solution of (NH₄)₂SO₄, 25 g of per kg of solution. The vessel body (A) of the vessel is equipped with baffles (B.2), a draft tube (B.1) and two propeller elements (C) with a diameter of 0.165 m and placed below the draft tube (diameter 0.23 m).

The temperature of the vessel volume is set to 45°C. The stirrer element is activated and constantly operated at 500 rounds per minute ("rpm", ~2.7 Watt/l). An aqueous solution containing NiSCO₄, CoSO₄ and MnSO₄ (molar ratio 6:2:2, total metal concentration: 1.65 mol/kg), an aqueous solution containing sodium hydroxide (25wt% NaOH) and aqueous ammonia solution (25wt% ammonia) are simultaneously introduced through different feeds into the vessel. The aqueous solution containing nickel, cobalt and manganese is fed through inlet pipes E. The molar ratio ammonia to transition metals is 0.2. The sum of volume flows is set to adjust the mean residence time to 8 hours. The flow rate of the NaOH is adjusted by a pH regulation circuit to keep the pH value at a constant value of 12.05. The apparatus is operated continuously keeping the liquid level in the reaction vessel constant. A mixed hydroxide of Ni, Co and Mn is collected via free overflow from the vessel. The resulting product slurry contains about 120g/l hydroxide precursor with an average particle diameter (D50) of 6 µm. The hydroxide precursor is excellently suited as precursor for a lithium ion battery cathode active material, and the through-put is high.

### Working Example 2:

The protocol of Working Example 1 is repeated with the following modification: the rotation speed of the Rushton turbine stirrer is set to 300 rpm (~0.6 Watt/l). The resulting slurry contains about 120 g/l hydroxide precursor with an average particle diameter (D50) of 7 µm. The hydroxide precursor is excellently suited as precursor for a lithium ion battery cathode active material.

## Claims

1. Process for precipitating a mixed carbonate or mixed (oxy)hydroxide comprising nickel from an aqueous solution comprising a nickel salt and at least one more transition metal selected from manganese and cobalt salts, wherein such process is carried out in a vessel comprising
(A) a vessel body,
(B) one or more elements selected from draft tubes and guide vanes,
(C) at least one stirrer whose pressure zone is in or between element(s) (B),
and wherein the process comprises the step of simultaneously adding said solution comprising a nickel salt in or between element(s) (B) and a solution of alkali metal carbonate or hydroxide in or between or outside element(s) (B).

2. Process according to claim 1 wherein two stirrers (C) with their pressure zones are located in or between the element(s) (B).

3. Process according to claim 1 or 2 wherein stirrer elements of such stirrers (C) are selected from pitch blade turbines, propellers, and hydrofoils .

4. Process according to any of the preceding claims wherein elements (B) are mounted to the internal surface of the vessel.

5. Process according to any of the preceding claims wherein elements (B) are mounted between the vessel lid and the vessel side walls.

6. Process according to any of the preceding claims wherein the vessel is a tank reactor.

7. Process according to any of the preceding claims wherein said reactor further comprises
(D) a solid-liquid separation device in which mother liquor is withdrawn from the slurry formed in said process.

8. Process according to any of the preceding claims wherein said process is a continuous process.

## Patentansprüche

1. Verfahren zum Ausfällen eines Nickel enthaltenden gemischten Carbonats oder gemischten (Oxid)hydroxids aus einer wässrigen Lösung, die ein Nickelsalz und mindestens ein weiteres Übergangsmetall, das aus Mangan- und Cobaltsalzen ausgewählt ist, enthält, wobei das Verfahren in einem Behälter durchgeführt wird, der
(A) einen Behälterkörper,
(B) ein oder mehrere Elemente, die aus Leitrohren und Leitschaufeln ausgewählt sind,
(C) mindestens einen Rührer, dessen Druckzone sich in oder zwischen Element(en) (B) befindet, umfasst,
und wobei das Verfahren den Schritt des gleichzeitigen Zugebens der ein Nickelsalz enthaltenden Lösung in oder zwischen Element (en) (B) und einer Lösung von Alkalimetallcarbonat oder -hydroxid in oder zwischen oder außerhalb Element(en) (B) umfasst.

2. Verfahren nach Anspruch 1, wobei sich zwei Rührer (C) mit ihren Druckzonen in oder zwischen dem Element bzw. den Elementen (B) befinden.

3. Verfahren nach Anspruch 1 oder 2, wobei die Rührelemente derartiger Rührer (C) aus Schrägblattturbinen, Propellern und Tragflügeln ausgewählt sind.

4. Verfahren nach einem der vorhergehenden Ansprüche, wobei Elemente (B) an der Innenoberfläche des Behälters befestigt sind.

5. Verfahren nach einem der vorhergehenden Ansprüche, wobei Elemente (B) zwischen dem Behälterdeckel und den Behälterseitenwänden befestigt sind.

6. Verfahren nach einem der vorhergehenden Ansprüche, wobei es sich bei dem Behälter um einen Kesselreaktor handelt.

7. Verfahren nach einem der vorhergehenden Ansprüche, wobei der Reaktor ferner
(D) eine Fest-Flüssig-Trennvorrichtung, in der Mutterlauge von der bei dem Verfahren gebildeten Aufschlämmung abgezogen wird, umfasst.

8. Verfahren nach einem der vorhergehenden Ansprüche, bei dem es sich um ein kontinuierliches Verfahren handelt.

## Revendications

1. Procédé pour la précipitation d'un carbonate mixte ou d'un (oxy)hydroxyde mixte comprenant du nickel à partir d'une solution aqueuse comprenant un sel de nickel et au moins un autre métal de transition choisi parmi des sels de manganèse et de cobalt, un tel procédé étant réalisé dans une cuve comprenant
(A) un corps de cuve,
(B) un ou plusieurs éléments choisis parmi des tubes d'aspiration et des aubes directrices,
(C) au moins un agitateur dont la zone de pression est dans ou entre un ou plusieurs éléments (B),
et, le procédé comprenant l'étape d'ajout de manière simultanée de ladite solution comprenant un sel de nickel dans ou entre un ou plusieurs éléments (B) et d'une solution de carbonate ou d'hydroxyde de métal alcalin dans ou entre ou à l'extérieur d'un ou plusieurs éléments (B).

2. Procédé selon la revendication 1, deux agitateurs (C) avec leurs zones de pression étant situés dans ou entre l'élément ou les éléments (B).

3. Procédé selon la revendication 1 ou 2, des éléments d'agitateur de tels agitateurs (C) étant choisis parmi des turbines à pales inclinées, des hélices et des ailerons porteurs.

4. Procédé selon l'une quelconque des revendications précédentes, les éléments (B) étant montés à la surface interne de la cuve.

5. Procédé selon l'une quelconque des revendications précédentes, les éléments (B) étant montés entre le couvercle de cuve et les parois latérales de cuve.

6. Procédé selon l'une quelconque des revendications précédentes, la cuve étant un réacteur à cuve.

7. Procédé selon l'une quelconque des revendications précédentes, ledit réacteur comprenant en outre
(D) un dispositif de séparation solide-liquide dans lequel de la liqueur mère est soutirée de la suspension formée dans ledit procédé.

8. Procédé selon l'une quelconque des revendications précédentes, ledit procédé étant un procédé continu.
